# FASCICULE DE BREVET EUROPEEN

(11) **EP 0 567 853 B1**
(45) Date de publication et mention de la délivrance du brevet: **15.02.1995**
(21) Numéro de dépôt: 93106127.9
(22) Date de dépôt: 15.04.1993
(51) Int. Cl.: A47J 42/56, A47J 43/046

(54) **Appareil ménager tel qu'un mixeur équipé d'un dispositif de sécurité**
Haushaltgerät wie ein Mischgerät mit einer Sicherheitsvorrichtung
Household appliance, like a mixer equipped with a security device

(30) Priorité: 30.04.1992 FR 9205363
(43) Date de publication de la demande: 03.11.1993
(73) Titulaire: MOULINEX S.A., F-93170 Bagnolet (FR)
(72) Inventeur: Trocherie, Jean-Pierre Alexandre Lucien, F-53700 Vilaines La Juhel (FR); Marriere, Marc Gilles Patrick, F-53700 Vilaines La Juhel (FR); Deschamps, Joel, F-53700 Vilaines La Juhel (FR)
(74) Mandataire: May, Hans Ulrich, Dr.

(56) Documents cités:
- DE-A- 2 928 107
- DE-A- 3 225 591
- FR-A- 1 119 057
- US-A- 1 997 873
- US-A- 3 612 126

## Description

L'invention se rapporte aux appareils ménagers, tels que les mixeurs, comprenant un boîtier qui présente sur sa partie supérieure un siège annulaire de réception d'un bol amovible, et qui renferme un moteur dont l'arbre de sortie fait saillie dudit siège, ledit bol ayant un fond amovible constitué par une embase ayant une forme complémentaire audit siège et dont la région centrale porte un outil rotatif solidaire d'un arbre traversant ladite embase et adapté à venir s'accoupler avec l'arbre de sortie du moteur lorsque ladite embase est correctement emboîtée sur le siège.

Elle concerne, plus précisément, les mixeurs dans lesquels l'embase comporte au moins une entrave qui est montée mobile à travers la paroi latérale de ladite embase entre une position escamotée pour laquelle elle autorise l'emboîtement de l'embase sur son siège et donc l'accouplement de l'outil avec l'arbre du moteur et en laquelle elle est amenée par la fixation correcte du bol sur l'embase, et une position saillante pour laquelle elle s'étend latéralement à l'embase de manière à empêcher l'accouplement de l'outil avec l'arbre du moteur et en laquelle elle est amenée automatiquement lorsque le bol n'est pas présent ou incorrectement fixé sur l'embase. Dans de tels appareils connus par le document DE-3 225 591, le rôle joué par l'entrave est d'interdire la mise en marche de l'appareil par un enfant avec l'embase porte-outil non équipée du bol, et ce en empêchant l'accouplement de l'outil sur l'arbre moteur lorsque le bol n'est pas présent ou incorrectement fixé sur l'embase.

D'après le document DE-3 225 591, de par sa conception et son montage, l'entrave n'est pas directement actionnée par le bol lors de la mise en place correcte de ce dernier sur l'embase et risque donc d'être insuffisamment escamotée pour autoriser l'accouplement de l'outil sur l'arbre moteur, interdisant alors la mise en marche de l'appareil même lorsque le bol est correctement fixé sur l'embase.

L'invention a notamment pour but de remédier à cet inconvénient et de réaliser une entrave de sécurité absolue parfaitement escamotable lors de la mise en place correcte du bol, réalisée sous la forme d'une pièce simple, de montage aisé sur l'embase, et parfaitement adaptée à une fabrication en grande série.

Selon un premier mode de réalisation de l'invention, l'entrave est montée articulée autour d'un axe horizontal au travers d'une lumière pratiquée dans l'embase et comporte de part et d'autre dudit axe une partie formant doigt dont l'actionnement est subordonné à la mise en place du bol sur l'embase, ainsi qu'une partie formant butée destinée à venir en prise avec la région supérieure du siège lorsque le doigt n'est pas actionné par le bol.

Selon un second mode de réalisation de l'invention, lié au précédent par le même concept inventif, l'entrave est montée articulée autour d'un axe vertical au travers d'une lumière pratiquée dans l'embase et comporte de part et d'autre de l'axe une partie formant doigt dont l'actionnement est subordonné à la mise en place du bol sur l'embase, ainsi qu'une partie formant butée destinée à venir en prise avec la région supérieure du siège lorsque le doigt n'est pas actionné par le bol.

Les caractéristiques et avantages de l'invention ressortiront d'ailleurs de la description qui va suivre, à titre d'exemple, en référence aux dessins annexés dans lesquels :

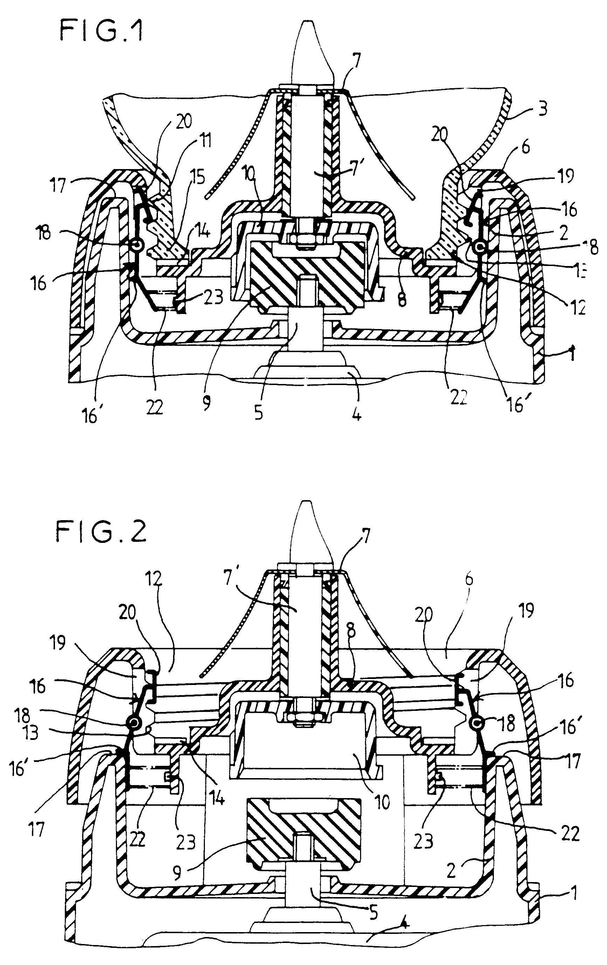

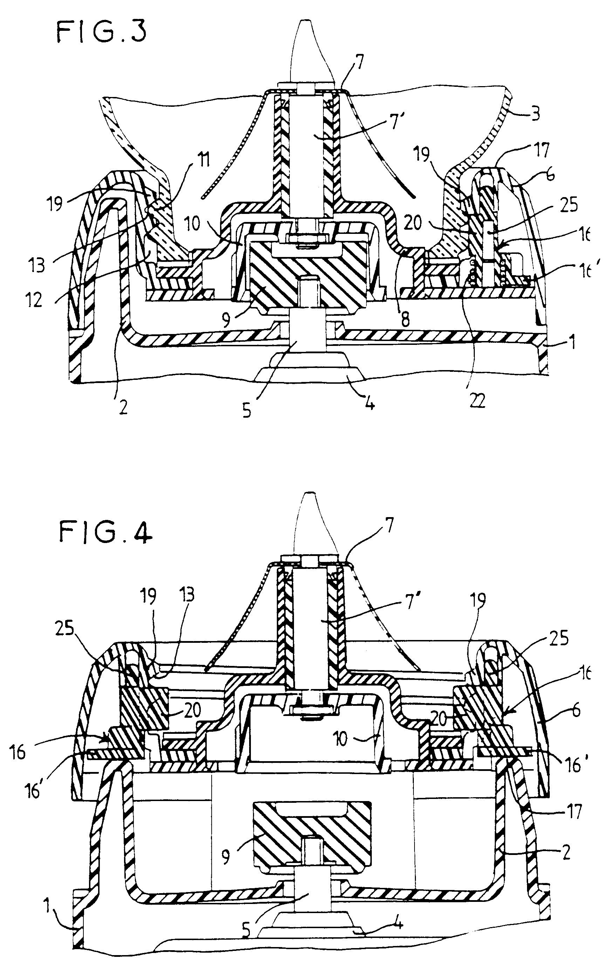

la figure 1 est une coupe verticale partielle d'un appareil ménager selon l'invention illustrant un bol associé à une embase équipée de deux entraves en position escamotée ; la figure 2 est une vue analogue à la figure 1 mais illustrant l'embase sans le bol et l'entrave en position saillante ; la figure 3 est une coupe verticale partielle analogue à la figure 1 d'un autre mode de réalisation de l'entrave selon l'invention ; la figure 4 est une vue analogue à la figure 3 mais illustrant l'embase sans le bol et les entraves représentées en élévation et en position saillante.

Comme représenté aux figures 1 et 2, l'appareil ménager est un mixeur comprenant un boîtier 1 qui présente sur sa partie supérieure un siège annulaire 2 en forme de cuvette destiné à recevoir un bol amovible 3, et qui renferme un moteur électrique 4 dont l'arbre de sortie 5 fait saillie du fond du siège 2. Comme on le voit mieux sur la figure 2, le bol 3 comporte un fond amovible constitué par une embase 6 qui présente une forme complémentaire au siège 2 et dont la région centrale porte un outil rotatif 7, tel qu'un couteau, solidaire d'un arbre 7' traversant la paroi de fond 8 de l'embase et adapté à venir s'accoupler avec l'arbre de sortie 5 du moteur.

De manière connue en soi, l'arbre 5 comprend un entraîneur en caoutchouc 9, tandis que l'arbre 7' porte une cloche rigide 10 destinée à venir coiffer l'entraîneur, pratiquement sur toute sa hauteur, lorsque l'embase 6 est correctement emboîtée sur le siège 2. La fixation amovible du bol 3 sur l'embase 6 est obtenue au moyen d'une fixation par filetage, le bol comportant à cet effet une nervure hélicoïdale 11 et la paroi latérale 12 de l'embase 6 comportant une rainure hélicoïdale 13 de forme complémentaire à la nervure 11. De manière à obtenir une bonne étanchéité de cette fixation, un joint annulaire 14 est interposé entre le fond 8 de l'embase et le bord 15 du bol 3.

L'embase 6 comporte au moins une entrave 16 qui est montée mobile à travers la paroi latérale 12 de l'embase entre une position escamotée (figures 1 et 3) pour laquelle elle autorise l'emboîtement de l'embase 6 sur son siège 2 et donc l'accouplement de l'entraîneur 9 et de la cloche 10 solidaire de l'outil et en laquelle elle est amenée par la fixation correcte du bol 3 sur l'embase 6, et une position saillante (figures 2 et 4) pour laquelle elle s'étend latéralement à l'embase et dont une partie 16' vient en prise avec la région supérieure 17 du siège de manière à empêcher l'accouplement de la cloche 10 avec l'entraîneur 9 du moteur et en laquelle elle est amenée automatiquement lorsque le bol 3 n'est pas présent ou incorrectement fixé sur l'embase 6.

Selon une première réalisation telle qu'illustrée aux figures 1 et 2, l'embase 6 est équipée de deux entraves 16 diamétralement opposées.
Chaque entrave 16 présente la forme d'un levier et est montée articulée autour d'un axe horizontal 18 au travers d'une lumière 19 pratiquée dans l'embase 6. A cet effet l'entrave comporte de part et d'autre de l'axe une partie 20 formant doigt dont l'actionnement est subordonné à la mise en place du bol 3 sur l'embase 6, ainsi qu'une partie 16' formant butée destinée à venir en prise avec la région supérieure 17 du siège 2 lorsque le doigt 20 n'est pas actionné par le bol 3.
Comme représenté, chaque entrave 16 est montée mobile à l'encontre d'un moyen élastique 22 tel que par exemple un ressort de compression agencé entre l'entrave et un siège 23 solidaire de l'embase 6. Pour faciliter l'actionnement des doigts 20, chaque doigt fait saillie de la lumière 19 et s'étend selon au moins un secteur de la rainure hélicoïdale 13 de l'embase 6.

Selon une seconde réalisation illustrée aux figures 3 et 4, et dans lesquelles on a gardé les mêmes références pour désigner les pièces analogues aux figures 1 et 2, l'embase 6 est équipée d'au moins deux entraves 16 diamétralement opposées et de préférence de quatre entraves opposées deux à deux.
Chaque entrave 16 est montée articulée autour d'un axe vertical 25 au travers d'une lumière 19 pratiquée dans l'embase 6 et comporte de part et d'autre de l'axe une partie 20 formant doigt dont l'actionnement est subordonné à la mise en place du bol 3 sur l'embase 6, ainsi qu'une partie 16' formant butée destinée à venir en prise avec la région supérieure 17 du siège 2 lorsque le doigt 20 n'est pas actionné par le bol 3.
Comme représenté à la figure 3, chaque entrave 16 est montée mobile à l'encontre d'un moyen élastique 22 tel qu'un ressort de torsion bobiné autour de l'axe vertical 25 et dont une extrémité est fixée sur l'embase et dont l'autre extrémité est attachée à l'entrave 16 de manière à rappeler automatiquement l'entrave et donc sa partie 16' en position saillante. Dans cette réalisation le doigt 20 et la butée 16 sont décalés en hauteur sur l'axe 25 de manière à garantir un espace entre l'entraîneur 9 et la cloche 10 lorsque la partie 16' vient en butée sur la partie supérieure 17 du siège 2.

Ainsi grâce à l'invention, on comprendra que si l'utilisateur ne visse pas correctement le bol 3 sur l'embase 6, ou bien ne met pas de bol sur ladite embase, les doigts d'actionnement 20 ne sont pas sollicités en l'absence du bol ou sont incorrectement sollicités lors d'un mauvais vissage, et donc les parties 16' formant butée sont, sous l'effet des ressorts 22, en position saillante et empêchent tout emboîtement de l'embase 6 dans le siège 2 par appui sur la région supérieure 17 du siège 2. Par conséquent, tout accouplement entre la cloche 10 du couteau 7 et l'entraîneur 9 est impossible. On comprendra également que par la disposition et le nombre d'entraves équipant l'embase, on empêche toute malveillance de mise en fonctionnement et l'on garantie ainsi une sécurité absolue. Pour utiliser le mixeur, il convient donc de mettre correctement en place le bol 3 sur l'embase 6 de manière à actionner tous les doigts 20 au moyen de la nervure hélicoïdale 11 du bol. Si tous les doigts 20 sont correctement actionnés, les parties 16' formant butées occupent leur position escamotée (figure 1 et 3) et permettent l'emboîtement de l'embase 6 dans le siège et donc l'accouplement de la cloche 10 avec l'entraîneur 9.
On comprendra qu'en donnant un jeu étroit entre les butées 16' et la cuvette du siège 2, on assure que l'emboîtement ne sera possible que si les doigts 20 sont bien actionnés par la nervure 11 et occupent une position bien définie par le constructeur.

## Revendications

1. Appareil ménager, tel qu'un mixeur, comprenant un boîtier (1) qui présente sur sa partie supérieure un siège annulaire (2) de réception d'un bol amovible (3), et qui renferme un moteur (4) dont l'arbre de sortie (5) fait saillie dudit siège, ledit bol (3) ayant un fond amovible constitué par une embase (6) de forme complémentaire audit siège (2) et dont la région centrale porte un outil rotatif (7) solidaire d'un arbre (7') traversant ladite embase et adapté à venir s'accoupler avec l'arbre de sortie (5) du moteur lorsque ladite embase est correctement emboîtée sur le siège, l'embase (6) comportant au moins une entrave (16) qui est montée mobile à travers la paroi latérale (12) de ladite embase entre une position escamotée pour laquelle elle autorise l'emboîtement de l'embase sur son siège (2) et donc l'accouplement de l'outil (7) avec l'arbre (5) du moteur (4) et en laquelle elle est amenée par la fixation correcte du bol (3) sur l'embase, et une position saillante pour laquelle elle s'étend latéralement à l'embase de manière à empêcher l'accouplement de l'outil (7) avec l'arbre (5) du moteur et en laquelle elle est amenée automatiquement lorsque le bol (3) n'est pas présent ou incorrectement fixé sur l'embase, **caractérisé en ce que** l'entrave (16) est monté articulée autour d'un axe horizontal (18) au travers d'une lumière (19) pratiquée dans l'embase (6) et comporte de part et d'autre dudit axe une partie (20) formant doigt dont l'actionnement est subordonné à la mise en place du bol (3) sur l'embase (6), ainsi qu'une partie (16') formant butée destinée à venir en prise avec la région supérieure (17) du siège (2) lorsque le doigt (20) n'est pas actionné par le bol (3).

2. Appareil ménager, tel qu'un mixeur, comprenant un boîtier (1) qui présente sur sa partie supérieure un siège annulaire (2) de réception d'un bol amovible (3), et qui renferme un moteur (4) dont l'arbre de sortie (5) fait saillie dudit siège, ledit bol (3) ayant un fond amovible constitué par une embase (6) de forme complémentaire audit siège (2) et dont la région centrale porte un outil rotatif (7) solidaire d'un arbre (7') traversant ladite embase et adapté à venir s'accoupler avec l'arbre de sortie (5) du moteur lorsque ladite embase est correctement emboîtée sur le siège, l'embase (6) comportant au moins une entrave (16) qui est montée mobile à travers la paroi latérale (12) de ladite embase entre une position escamotée pour laquelle elle autorise l'emboîtement de l'embase sur son siège (2) et donc l'accouplement de l'outil (7) avec l'arbre (5) du moteur (4) et en laquelle elle est amenée par la fixation correcte du bol (3) sur l'embase, et une position saillante pour laquelle elle s'étend latéralement à l'embase de manière à empêcher l'accouplement de l'outil (7) avec l'arbre (5) du moteur et en laquelle elle est amenée automatiquement lorsque le bol (3) n'est pas présent ou incorrectement fixé sur l'embase, **caractérisé en ce que** l'entrave (16) est monté articulée autour d'un axe vertical (25) au travers d'une lumière (19) pratiquée dans l'embase (6) et comporte de part et d'autre de l'axe une partie (20) formant doigt dont l'actionnement est subordonné à la mise en place du bol (3) sur l'embase (2), ainsi qu'une partie (16') formant butée destinée à venir en prise avec la région supérieure (17) du siège (2) lorsque le doigt (20) n'est pas actionné par le bol (3).

3. Appareil ménager selon la revendication 1 ou 2,
**caractérisé en ce que** la fixation amovible du bol (3) sur l'embase (6) est obtenu au moyen d'une fixation par filetage, le bol (3) comportant à cet effet une nervure hélicoïdale (11) et la paroi latérale (12) de l'embase (6) comportant une rainure hélicoïdale (13) de forme complémentaire à la nervure (11), et en ce que le doigt d'actionnement (20) de l'entrave (16) fait saillie de la lumière (19) et s'étend selon au moins un secteur de la rainure (13) de l'embase.

4. Appareil ménager selon l'une quelconque des revendications précédentes,
**caractérisé en ce que** l'embase (6) est équipée d'au moins deux entraves (16) diamétralement opposées.

5. Appareil ménager selon l'une quelconque des revendications précédentes,
**caractérisé en ce que** l'entrave (16) est montée mobile à l'encontre d'un moyen élastique (22) qui tend à la rappeler en position saillante.

## Claims

1. Domestic appliance, such as a mixer, comprising a casing (1) which has, on its top part, an annular seat (2) for receiving a removable bowl (3), and which contains a motor (4), the output shaft of which (5) projects from the said seat, the said bowl (3) having a removable bottom consisting of a base (6) with a shape complementary to the said seat (2) and the central area of which carries a rotary tool (7) fixed to a shaft (7') passing through the said base and suitable for being coupled to the output shaft (5) of the motor when the said base is correctly fitted onto the seat, the base (6) including at least one interlock (16) which is mounted so as to be able to move through the lateral wall (12) of the said base between a retracted position, in which it enables the base to be fitted onto its seat (2) and therefore the tool (7) to be coupled to the shaft (5) of the motor (4) and into which it is brought by the correct fixing of the bowl (3) onto the base, and a projecting position in which it extends laterally to the base so as to prevent the coupling of the tool (7) to the shaft (5) of the motor and into which it is brought automatically when the bowl (3) is not present or is incorrectly fixed to the base, characterised in that the interlock (16) is mounted so as to pivot about a horizontal pin (18) through an aperture (19) formed in the base (6) and has, on each side of the said pin, a part (20) forming a finger, the actuation of which is dependent on the positioning of the bowl (3) on the base (6), and a part (16') forming a stop designed to engage with the top area (17) of the seat (2) when the finger (20) is not actuated by the bowl (3).

2. Domestic appliance, such as a mixer, comprising a casing (1) which has, on its top part, an annular seat (2) for receiving a removable bowl (3), and which contains a motor (4), the output shaft (5) of which projects from the said seat, the said bowl (3) having a removable bottom consisting of a base (6) with a shape complementary to the said seat (2) and the central area of which carries a rotary tool (7) fixed to a shaft (7') passing through the said base and suitable for being coupled to the output shaft (5) of the motor when the said base is correctly fitted onto the seat, the base (6) including at least one interlock (16) which is mounted so as to be able to move through the lateral wall (12) of the said base between a retracted position, in which it enables the base to be fitted onto its seat (2) and therefore the tool (7) to be coupled to the shaft (5) of the motor (4) and into which it is brought by the correct fixing of the bowl (3) onto the base, and a projecting position in which it extends laterally to the base so as to prevent the coupling of the tool (7) to the shaft (5) of the motor and into which it is brought automatically when the bowl (3) is not present or is incorrectly fixed to the base, characterised in that the interlock (16) is mounted so as to pivot about a vertical pin (25) through an aperture (19) formed in the base (6) and has, on each side of the pin, a part (20) forming a finger, the actuation of which is dependent on the positioning of the bowl (3) on the base (2), and a part (16') forming a stop designed to engage with the top area (17) of the seat (2) when the finger (20) is not actuated by the bowl (3).

3. Domestic appliance according to Claim 1 or 2, characterised in that the base (6) is removably fixed to the bowl (3) by means of a threaded mounting, the bowl (3) having, for this purpose, a helical rib (11) and the lateral wall (12) of the base (6) having a helical groove (13) complementary in shape to the rib (11), and in that the actuating finger (20) of the interlock (16) projects from the aperture (19) and extends along at least one segment of the groove (13) of the base.

4. Domestic appliance according to any one of the preceding claims, characterised in that the base (6) is equipped with at least two diametrically opposite interlocks (16).

5. Domestic appliance according to any one of the preceding claims, characterised in that the interlock (16) is mounted so as to be able to move against an elastic means (22) which tends to return it to the projecting position.

## Patentansprüche

1. Küchengerät, wie ein Mixer, mit einem Gehäuse (1), das an seinem oberen Teil einen ringförmigen Sitz (2) zur Aufnahme eines abnehmbaren Behälters (3) aufweist und einen Motor (4) umschließt, dessen Abtriebswelle (5) vom Sitz vorsteht, wobei der Behälter (3) einen abnehmbaren Boden hat, der aus einem Sockel (6) von zum Sitz (2) komplementärer Form besteht und dessen Mittelbereich ein drehbares Werkzeug (7) trägt, das mit einer den Sockel durchsetzenden Welle (7') fest verbunden und zur Kupplung mit der Abtriebswelle (5) des Motors eingerichtet ist, wenn der Sockel richtig auf den Sitz aufgesetzt ist, wobei der Sockel (6) mindestens einen Sicherheitsriegel (16) aufweist, der durch die Seitenwand (12) des Sockels beweglich montiert ist, so daß er zwischen einer weggedrückten oder Freigabestellung, in welcher er das Einsetzen des Sockels auf seinen Sitz (2) und damit die Kupplung des Werkzeugs (7) mit der Welle (5) des Motors (4) gestattet und in welche er durch die richtige Befestigung des Behälters (3) auf dem Sockel gebracht wird, und einer vorspringenden oder Sperrstellung beweglich ist, in welcher er sich seitlich vom Sockel so erstreckt, daß er die Kupplung des Werkzeugs (7) mit der Welle (5) des Motors verhindert und in die er automatisch gebracht wird, wenn der Behälter (3) nicht vorhanden oder nicht richtig auf dem Sockel befestigt ist, **dadurch gekennzeichnet,** daß der Sicherheitsriegel (16) um eine durch ein im Sockel (6) ausgebildetes Langloch oder einen Schlitz (19) gehende horizontale Achse (18) angelenkt montiert ist und beiderseits der Achse einen Teil (20) aufweist, der einen Finger bildet, dessen Wirkung dem Einsetzen des Behälters (3) auf dem Sockel (6) untergeordnet ist, sowie einen als Anschlag dienenden Teil (16') aufweist, der mit dem oberen Bereich (17) des Sitzes (2) in Eingriff kommt, wenn der Finger (20) vom Behälter (3) nicht beaufschlagt ist.

2. Küchengerät, wie ein Mixer, mit einem Gehäuse (1), das in seinem oberen Teil einen ringförmigen Sitz (2) zur Aufnahme eines abnehmbaren Behälters (3) aufweist und einen Motor (4) umschließt, dessen Abtriebswelle (5) vom Sitz vorspringt, wobei der Behälter (3) einen abnehmbaren Boden hat, der aus einem Sockel (6) von zum Sitz (2) komplementärer Form besteht, und dessen Mittelbereich ein drehbares Werkzeug (7) trägt, das mit einer den Sockel durchsetzenden Welle (7') fest verbunden und zum Kuppeln mit der Abtriebswelle (5) des Motors eingerichtet ist, wenn der Sockel richtig auf den Sitz eingesetzt ist, wobei der Sockel (6) mindestens einen Sicherheitsriegel (16) aufweist, der durch die Seitenwand (12) des Sockels zwischen einer weggedrückten oder Freigabestellung, in welcher er das Einsetzen des Sockels auf seinen Sitz (2) und damit die Kupplung des Werkzeugs (7) mit der Welle (5) des Motors (4) zuläßt und in welche der durch richtige Befestigung des Behälters (3) auf dem Sockel gebracht wird, und einer vorspringenden oder Sperrstellung beweglich ist, in welcher er sich seitlich vom Sockel so erstreckt, daß er das Kuppeln des Werkzeugs (7) mit der Welle des Motors verhindert und in welche Stellung er automatisch gebracht wird, wenn der Behälter (3) nicht vorhanden oder auf dem Sockel nicht richtig befestigt ist, **dadurch gekennzeichnet,** daß der Sicherheitsriegel (16) um eine vertikale Achse (25) durch ein im Sockel (6) ausgebildetes Langloch oder einen Schlitz (19) hindurch angelenkt montiert ist und beiderseits der Achse einen Teil (20) aufweist, der einen Finger bildet, dessen Betätigung dem Einsetzen des Behälters (3) auf dem Sockel (2) untergeordnet ist, sowie einen einen Anschlag bildenden Teil (16') aufweist, der in Eingriff mit dem oberen Teil (17) des Sitzes (2) kommt, wenn der Finger (20) von dem Behälter (3) nicht betätigt ist.

3. Küchengerät nach Anspruch 1 oder 3, **dadurch gekennzeichnet,** daß die abnehmbare Befestigung des Behälters (3) auf dem Sockel (6) mittels einer Schraubbefestigung erhalten wird, wobei der Behälter (3) zu diesem Zweck eine Schraubenrippe (11) aufweist und die Seitenwand (12) des Sockels (6) eine Schraubennut (13) von einer zur Rippe (11) komplementären Form aufweist, und daß der Betätigungsfinger (20) des Sicherheitsriegels (16) aus dem Langloch oder Schlitz (19) vorsteht und sich längs mindestens eines Sektors der Nut (13) des Sockels erstreckt.

4. Küchengerät nach einem der vorangehenden Ansprüche, **dadurch gekennzeichnet,** daß der Sockel (6) mit mindestens zwei diametral gegenüberliegenden Sicherheitsriegeln (16) augerüstet ist.

5. Küchengerät nach einem der vorangehenden Ansprüche, **dadurch gekennzeichnet,** daß der Sicherheitsriegel (16) gegen die Beaufschlagung durch eine elastische Vorrichtung (22) beweglich montiert ist, welche bestrebt ist, ihn in die vorspringende Stellung zurückzustellen.
